# EUROPEAN PATENT SPECIFICATION

(11) **EP 4 325 240 B1**
(45) Date of publication and mention of the grant of the patent: **09.12.2026**
(21) Application number: 22190991.4
(22) Date of filing: 18.08.2022
(51) Int. Cl.: G01S 7/02, G01S 7/292, G01S 7/35, G01S 13/50, G01S 13/58

(54) **APPARATUS, ELECTRONIC DEVICE AND METHOD FOR TARGET MOTION DETECTION**
GERÄT, ELEKTRONISCHE VORRICHTUNG UND VERFAHREN ZUR ZIELBEWEGUNGSDETEKTION
APPAREIL, DISPOSITIF ÉLECTRONIQUE ET PROCÉDÉ POUR LA DÉTECTION D'UN MOUVEMENT DE CIBLE

(43) Date of publication of application: 21.02.2024
(73) Proprietor: Infineon Technologies AG, 85579 Neubiberg (DE)
(72) Inventor: WILL, Christoph, 81673 München (DE); DORFNER, Andreas, 85591 Vaterstetten (DE)
(74) Representative: 2SPL Patentanwälte PartG mbB

(56) References cited:
- EP-A2- 1 672 379
- KR-B1- 101 935 653
- US-A1- 2016 025 847
- FOROUZANFAR MOHAMAD ET AL: "Event Recognition for Contactless Activity Monitoring Using Phase-Modulated Continuous Wave Radar", IEEE TRANSACTIONS ON BIOMEDICAL ENGINEERING, IEEE, USA, vol. 64, no. 2, 1 February 2017 (2017-02-01), pages 479 - 491, XP011639423, ISSN: 0018-9294, [retrieved on 20170119], DOI: 10.1109/TBME.2016.2566619

## Description

### Field

The present disclosure relates to target motion detection. Examples of the present disclosure relate to an apparatus, an electronic device and a computer-implemented method for target motion detection.

### Background

When several radar sensors are operated at a same or similar radio frequency and with small distance to each other, respective radar signals may interfere with each other. Conventionally, this may wrongly trigger the radar sensors in their detection of a target motion. Hence, there may be a demand for improved target motion detection.

Document EP 1672379 A2 proposes a system and method for minimizing the effect of an interfering signal in the radar return signal of a frequency modulated continuous wave (FMCW) radar. The method involves detecting the interfering signal, determining the extent of interference, and removing the interfering signal from the radar return signal, enabling the radar to detect targets even in the presence of the interfering signal. This system and method can be profitable for any FMCW radar operating within range of an interfering radar source in the same frequency band, like another FMCW radar, a police radar gun, or a pulse radar.

Document KR 101935653 B1 proposes a method and device for identifying the state of an occupant using radar. In one embodiment, the device includes a section that eliminates unwanted clutter from the radar's signal, picks out points in the signal where the occupant's movement is maximal, creates an occupant status signal by connecting these points in each slow time axis, and finally, classifies the status signal as either a vital or movement signal by comparing the signal's maximum point value with preset thresholds for detecting these different types of signals.

Document FOROUZANFAR MOHAMAD ET AL: "Event Recognition for Contactless Activity Monitoring Using Phase-Modulated Continuous Wave Radar", IEEE TRANSACTIONS ON BIOMEDICAL ENGINEERING, vol. 64, no. 2, 1 February 2017 (2017-02-01), pages 479-491, XP011639423 proposes a methodology for classifying different events in a collection of phase modulated continuous wave radar returns. The primary application of interest is to monitor inmates where the presence of human vital signs amidst different, interferences needs to be identified.

Document US 2016/025847 A1 discloses a detection of a biological condition of a human by using a Doppler sensor providing in-phase (I) and quadrature (Q) signals. A frequency component is obtained by counting the number of times each of the I signal and the Q signal crosses over the zero point within a certain time period, and by summing the number of I signal crossovers and the number of Q signal crossovers. One of three states characterising a human (absent, resting, active) is determined based inter alia on the frequency component.

### Summary

The demand may be satisfied by the subject matter of the independent claims.

According to a first aspect, the present disclosure relates to an apparatus comprising interface circuitry configured to receive data indicating a measurement signal of a radar sensor. The data indicate an in-phase component and a quadrature component of the measurement signal. The apparatus further comprises processing circuitry configured to determine a first rate at which an in-phase component of the measurement signal crosses a first predefined value, determine a second rate at which a quadrature component of the measurement signal crosses a second predefined value, and determine an overall rate by summing up the first rate and the second rate. The processing circuitry is further configured to determine presence of a target motion by determining whether the overall rate is below a first threshold, and, in response to determining that the overall rate is below the first threshold, determining that a target motion is present in the field of view. In addition, the processing circuitry is configured to determine presence of an interference signal by determining whether the overall rate exceeds a second threshold, and,
in response to determining that the overall rate exceeds the second threshold, determining that an interference signal is present in the field of view.

According to a second aspect, the present disclosure relates to an electronic device comprising an apparatus according to the first aspect and control circuitry configured to control an operation of the electronic device based on an output signal of the apparatus.

According to a third aspect, the present disclosure relates to a computer-implemented method. The method comprises receiving data indicating a measurement signal of a radar sensor.

The data indicate an in-phase component and a quadrature component of the measurement signal. The method further comprises determining a first rate at which an in-phase component of the measurement signal crosses a first predefined value, determining a second rate at which a quadrature component of the measurement signal crosses a second predefined value, and determining an overall rate by summing up the first rate and the second rate. In addition, the method comprises determining presence of a target motion by determining whether the overall rate is below a first threshold, and, in response to determining that the overall rate is below the first threshold, determining that a target motion is present in the field of view. The method comprises determining presence of an interference signal by determining whether the overall rate exceeds a second threshold, and, in response to determining that the overall rate exceeds the second threshold, determining that an interference signal is present in the field of view-

According to a fourth aspect, the present disclosure relates to a program having a program code for performing the method according to the third aspect, when the program is executed on a processor or a programmable hardware.

According to a fifth aspect, the present disclosure relates to a non-transitory machine-readable medium having stored thereon the program according to the fourth aspect.

### Brief description of the Figures

Some examples of apparatuses and/or methods will be described in the following by way of example only, and with reference to the accompanying figures, in which
Fig. 1 illustrates an example of an apparatus as described herein;
Fig. 2a to Fig. 2d illustrate examples of data indicating a measurement signal of a radar sensor;
Fig. 3 illustrates an example of an electronic device comprising an apparatus as described herein;
Fig. 4 illustrates a flowchart of an example of a computer-implemented method; and
Fig. 5 illustrates a flowchart of another example of a computer-implemented method.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

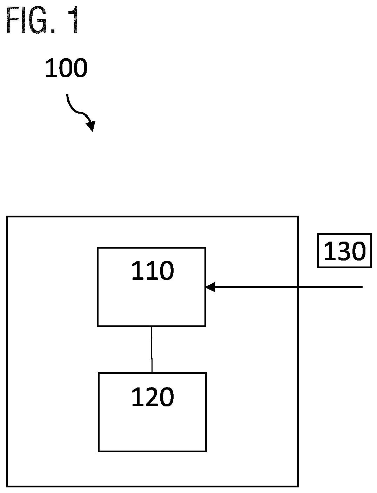

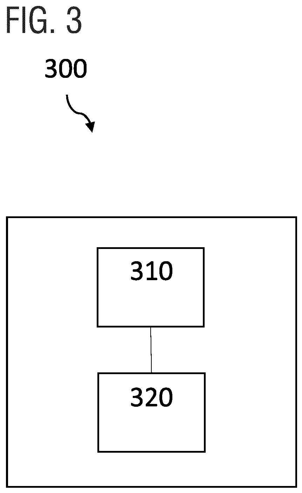

Fig. 1 illustrates an example of an apparatus 100 comprising interface circuitry 110 and processing circuitry 120. The apparatus 100 may be for a radar sensor. The apparatus 100 may, e.g., be integrated into a computing system coupled to the radar sensor, into an electronic device as described below with reference to Fig. 3, or into the radar sensor.

The interface circuitry 110 is communicatively coupled to the processing circuitry 120. The interface circuitry 110 may be any electronic circuitry providing an interface for data transmission to the processing circuitry 120.

The processing circuitry 120 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 120 may optionally be coupled to, e.g., read only memory (ROM) for storing software, random access memory (RAM) and/or non-volatile memory.

The interface circuitry 110 is configured to receive data 130 indicating a measurement signal of the radar sensor. For instance, the interface circuitry 110 may be communicatively coupled to the radar sensor and may receive the data 130 from the radar sensor.

The measurement signal may be understood as signal output by the radar sensor. The measurement signal may be, e.g., raw data of the radar sensor or a down-converted output of the radar sensor. For instance, an antenna of the radar sensor may receive a radar receive signal in the radio frequency range, e.g., with a frequency of 300 Gigahertz or below. An analog-to-digital converter (ADC) of the radar sensor may output (generate) the data 130 by sampling the radar receive signal. The data 130 may comprise, e.g., multiple samples where each sample may be a digital number between 0 and (2^{N})-1 with N being a resolution of the ADC sampling, a digitized voltage of the radar receive signal or a normalized value thereof. For instance, the radar sensor may be a Doppler radar sensor, i.e., a radar sensor using the Doppler effect to generate data (e.g., data 130) indicating a velocity of objects in the scene. In the latter case, the data 130 may indicate a difference between a frequency of a radar emit signal (emitted by the radar sensor towards its field of view) and a frequency of the radar receive signal.

The processing circuitry 120 is configured to determine a rate at which the measurement signal crosses a predefined value based on the data 130. In some parts of the present application, this rate may be referred to as rate of crossings.

In some examples, the processing circuitry 120 is configured to determine the rate by determining a number of crossings of the predefined value per at least one frame of the data 130. For instance, the data 130 may be partitioned into several frames and the processing circuitry 120 may be configured to determine the number of crossings for each of the frames. The processing circuity 120 may determine the rate by relating the number of crossings to a predefined number of samples of the frame. For instance, the predefined number of samples may correspond to a frame length of the frame. In some examples, the processing circuitry is configured to determine the rate by determining an average number of crossings over at least two frames of the data 130. The apparatus 100 may, in some examples, further comprise memory configured to store a respective number of crossings of the predefined value for each of a predefined number of subsequent frames of the data 130. In the latter case, the processing circuitry 120 may be configured to determine the average number of crossings based on the respective number of crossings stored in the memory. For instance, the number of crossings may be stored in an array, serving as a sliding window. This may enhance reliability and stabilization of the interference signal/target motion detection compared to an evaluation of the rate of crossings based on only one frame of the data 130. Hence, the apparatus 100 may avoid false motion or false interference signal detections due to statistical outliers.

The processing circuitry 120 may determine the rate based on any method for counting transitions across the predefined value, e.g., the processing circuitry 120 may determine a difference between the measurement signal and the predefined value and determine the rate by counting alternating signs of two or more consecutive samples in the difference, i.e., by counting the sign changes. The processing circuitry 120 may count the sign changes in a predefined manner, e.g., by evaluating a difference of 0 as positive or negative sign or as neutral, i.e., a "full crossing" of the predefined value has to be present for a count up. Optionally, the processing circuitry 120 may solely count negative-to-positive sign changes (rising transitions over the predefined value) for determining the number of crossings or vice versa. Optionally, the processing circuitry 120 may solely count sign changes with a difference over a certain threshold.

The predefined value may be any value, e.g., a mean, median or nominal value of the measurement signal. In case the data 130 is scaled or normalized such that the mean value of the resulting measurement signal constitutes a zero line, the predefined value may be 0 as dimensionless Bit value or 0 Volt as voltage. In the latter case, the rate may be considered a zero crossing rate. Alternatively, the predefined value may be any value unequal to 0. For instance, the predefined value may be selected such that the resulting rate of crossings is a (suitable) indicator for presence of at least one of an interference signal and a target motion in the field of view of the radar sensor (e.g., with a desired probability), as described below.

The data 130 indicate an in-phase component and a quadrature component of the measurement signal. The processing circuitry 120 may be configured to determine the rate by determining at which rate at least one of the in-phase component and the quadrature component crosses the predefined value. According to the invention, the processing circuitry 120 determines respective rates at which the in-phase component and the quadrature component crosses a respective predefined value (of which at least one may be the aforementioned predefined value) and determine the (overall) rate by adding the respective rates.

The processing circuitry 120 is further configured to determine presence of at least one of an interference signal and a target motion in the field of view of the radar sensor based on the rate. For instance, the processing circuitry 120 may distinguish between an interference signal and a target motion based on the rate.

The target motion may be a motion of an object in the field of view (scene) which causes modification of the measurement signal based on the Doppler effect, e.g., when a radar emit signal of the radar sensor has been reflected off of the object during its movement and the radar receive signal comprises said reflection.

The interference signal may be any signal which interferes with a radar emit signal emitted by the radar sensor or reflections thereof and which may, thus, lead to an undesired modification of the measurement signal. The interference signal may, e.g., be emitted by a second radar sensor (an "interferer") in the vicinity of the radar sensor and operating with a similar radar signal frequency like the radar sensor.

Conventionally, such interference signals may cause the radar sensor to falsely detect a target motion. By contrast, the apparatus 100 may decrease such false target motion detection of the radar sensor. This may increase the accuracy of target motion detection. In case an electronic device is triggered to operate based on a detected target motion, the apparatus 100 may lower the power consumption of the electronic device as it may prevent the electronic device to be falsely woken up. Further, the apparatus 100 may enable the operation of multiple radar sensors close to each other, even with similar operating frequencies.

Since the rate may indicate a fluctuation of the measurement signal around the predefined value, the rate of crossings of a predefined value may be an indication of spectral characteristics of the measurement signal. Therefore, the rate may be a suitable means for determining presence of the at least one of an interference signal and a target motion in the field of view.

In case that no target motion or interference signal is present in the scene and, thus, the data 130 solely comprises noise, the measurement signal may exhibit a rate of crossings substantially within a certain first value range and statistically converging to an approximately stable value. This may be due to noise varying the measurement signal in a random manner but with a predefined probability distribution.

An interference signal or a target motion in the scene may lead to a rate of crossings in the data 130 within a certain second and third value range, respectively, and statistically distributed (e.g., normally) over an expected first and second value. Compared to noise, target motions in the scene may rather lead to a sinusoidal signal curve in the data 130, thus, to a rate of crossings which is distinguishable from a rate of crossings caused by noise. Interferers may cause a higher frequent noise behavior and, thus, to a higher rate of crossings than pure noise.

The value ranges and the respective expected value and standard deviation may depend on the application of the radar sensor, e.g., on the operating frequency of the radar sensor or on a velocity range of the target motion which is to be measured. For instance, target motions exhibiting a high velocity may substantially lead to a higher rate of crossings than those with a low velocity. Since the value ranges of the rate of crossings may differ from each other (e.g., with no or a tolerably small overlapping), the processing circuitry 120 may distinguish between a target motion, an interference signal and, optionally, noise based on the determined rate of crossings in the measurement signal. The number of samples or frames over which the rate of crossings shall be determined, may be selected such that a differentiation between the interference signal and the target motion is possible with a desired accuracy, i.e., such that statistical outliers may be substantially averaged out in the determined rate of crossings.

In some examples, the processing circuitry 120 may be configured to determine presence of the at least one of an interference signal and a target motion by determining whether the rate exceeds a threshold. For instance, the threshold may be selected such that it is between the expected value of the second and the third value range. In the latter case, the exceeding or falling below the threshold may be an indication of either a target motion or an interference signal being present in the scene. Alternatively, the threshold may be selected such that it lies within the first value range, such that exceeding or falling below the threshold may indicate that not only noise, thus, at least one of an interference signal and a target motion is present.

The processing circuitry 120 is configured to determine presence of a target motion by determining whether the rate is below a first threshold and, in response to determining (if it is determined) that the rate is below the first threshold, determining that a target motion is present in the field of view. The latter may be useful in cases where the expected velocity range of the target motion (e.g., including characteristic velocities of targets addressed by the application) leads to a second value range of the rate of crossings which is substantially smaller than the first and/or third value range corresponding to presence of (solely) noise and (solely) interference, respectively, i.e., a second value range with a smaller expected value and no or tolerable overlapping with the first and/or third value range. For instance, if the radar sensor is to detect motion of humans in the scene, usual velocities of humans may lead to a smaller rate of crossings with respect to a rate caused by pure noise or interference in the scene.

The processing circuitry 120 is configured to determine presence of an interference signal by determining whether the rate exceeds a second threshold and, in response to determining (if it is determined) that the rate exceeds the second threshold, determining that an interference signal is present in the field of view. The latter may be useful in cases where the expected interference signal leads to a third value range of the rate of crossings which is substantially greater than the first and/or second value range corresponding to noise and target motion, respectively.

In cases where both, a target motion and an interferer, are present in the scene, the target motion may still be detectable based on the rate of crossings when a suitable threshold for evaluating the rate is selected.

A first rate at which an in-phase component of the measurement signal crosses a first predefined value (e.g., a mean value of the in-phase component) and a second rate at which a quadrature component of the measurement signal crosses a second predefined value (e.g., a mean value of the quadrature component) are determined. The first rate and the second rate may be determined by determining a respective number of crossings per a predefined respective number of samples. For example, the first rate may be determined by determining a number of crossings of the in-phase component per, e.g., 256 or 100 samples. The second rate may be determined by determining a number of crossings of the quadrature component per, e.g., 256 or 100 samples. The (overall) rate is determined by summing up the first rate and the second rate. For an application for detecting motion of humans, an exemplary first threshold may be set to 170 for the example of 256 samples or 60 for the example of 100 samples. In the latter example, interferers may be expected to operate with frequencies around 61.25 Gigahertz. Then, an exemplary second threshold may be set to 190 for the example of 256 samples or 80 for the example of 100 samples.

The apparatus 100 may enable detection of an interference signal and a target motion based on simple evaluations of the rate of crossings in the measurement signal of a radar sensor, e.g., based on simple comparator operations. Hence, the apparatus 100 may simplify the circuit design in comparison to complicated conventional algorithms or filters for mitigating false detection of target motion caused by interference.

In some examples, the interface circuitry 110 is further configured to receive second data indicating that a target motion is potentially detected in the field of view. The processing circuitry 120 may be configured to determine the rate upon receiving the second data. Alternatively, the processing circuitry 120 may further be configured to determine potential presence of a target motion based on the data 130 and, if potential presence of the target motion is determined, determine the rate.

That is, there may be an upstream process for target motion detection (external to the apparatus 100 or integrated into the apparatus 100) which may be supported by evaluation of the rate of crossings described herein. This may increase the accuracy of target motion detection and allow the upstream process to operate in a more power-efficient manner and with simpler circuit design, e.g., based on evaluation of less samples of the data 130. Further, the upstream process may prevent a false alarm in the evaluation of the rate of crossings since its conventional motion detection may preclude the exclusive presence of noise potentially causing the false alarm, i.e., it has determined potential presence of a target motion (meaning a target motion, an interference signal or both is present) before activating the evaluation of the rate of crossings. Alternatively, the conventional motion detection may be operated in parallel with the evaluation of the rate of crossings.

For instance, the processing circuitry 120 may be configured to determine potential presence of a target motion based on at least one of a peak-to-peak value of the measurement signal, a sum of at least one amplitude value of the measurement signal in a frequency domain of the measurement signal and a maximum amplitude value of the measurement signal in the frequency domain. Alternatively, an upstream process may comprise executing, externally to the apparatus 100, the latter methods for determining potential presence of a target motion and communicating an indication of a potential target (i.e., the second data) to the apparatus 100.

In some examples where a first and second threshold are used for evaluating the rate of crossings as explained above and the second threshold is greater than the first threshold, the interface circuitry 110 may further be configured to, in response to determining (if it is determined) that the rate is between the first threshold and the second threshold, send third data indicating that a target motion is potentially detected in the field of view.

That is, the apparatus 100 may provide a pre-evaluation of the rate of crossings and in case of an ambiguous result, i.e., potential detection of a target motion, an external downstream process may be enabled for executing a predefined data analysis process on the data 130. Alternatively, the processing circuitry 120 may be further configured to, in response to determining (if it is determined) that the rate is between the first threshold and the second threshold, perform the predefined data analysis process on the data 130 to determine whether an interference signal or a target motion is present in the field of view, i.e., the apparatus 100 may perform the downstream process itself. The predefined data analysis process may use any conventional method for determining presence of an interference signal based on the data 130. Alternatively, in response to determining (if it is determined) that the rate is between the first threshold and the second threshold, any interference mitigation process may be performed, such as changing the operating frequency of the radar sensor. The detection based on the rate of crossings may, thus, be supported by the downstream process. This may increase the accuracy of target motion detection and decrease power consumption of the overall system since the more energy-intensive data analysis process is only enabled in case of an ambiguous result in the evaluation of the rate of crossings.

In some examples, the apparatus 100 comprises memory and the processing circuitry 120 is further configured to, after determining presence of the at least one of an interference signal and a target motion, write an initialization value into the memory. Optionally, the initialization value may be written into the memory when an upstream process for target motion detection has not triggered the evaluation of the rate of crossings. The usage of the initialization value may be beneficial for an accurate evaluation of an average number of crossings in measurement signal where values in a certain location of the memory are used for determining the average number. That is, statistical variations in the measurement signal may be averaged out more reliably with the help of the initialization value.

In some examples, the initialization value may be an average (or mean value) of the first threshold and the second threshold. In this manner, the initialization value may ensure that the subsequent determined rate of crossings need to be clearly below the first threshold to trigger a target motion detection or that the initialization values in the memory are mostly overwritten before a target motion detection is triggered. Alternatively, the initialization value may be any value between the first threshold and the average of the first threshold and the second threshold. The initialization value may be slightly above the first threshold, i.e., be equal to the first threshold plus an offset (e.g., an offset of 1). The latter may be beneficial in case the application of the apparatus 100 is to indicate only target motion and the two scenarios "potential target motion" or "interference signal" are to be hidden and combined to an output indicating that no target motion is detected.

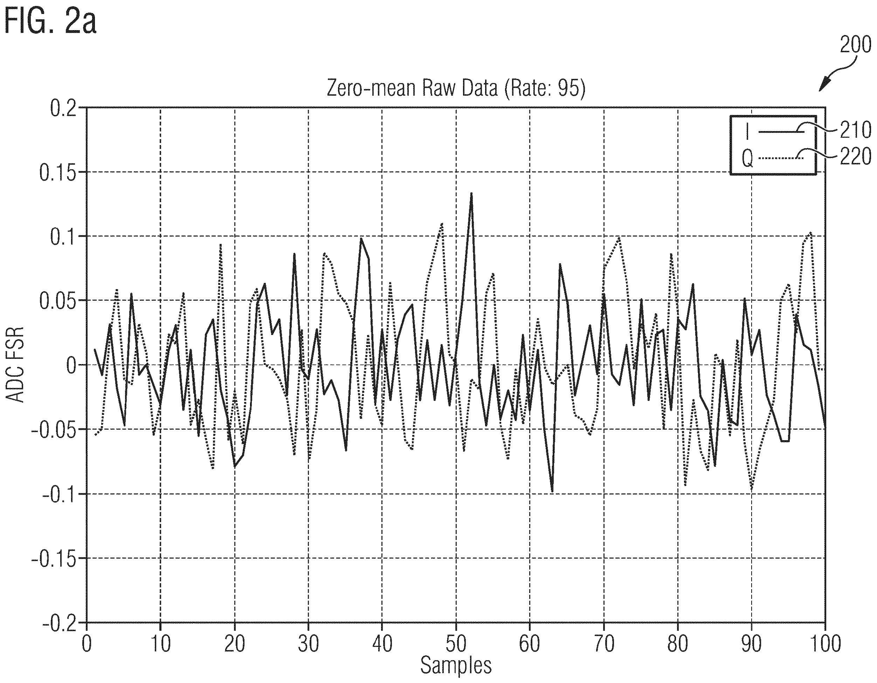

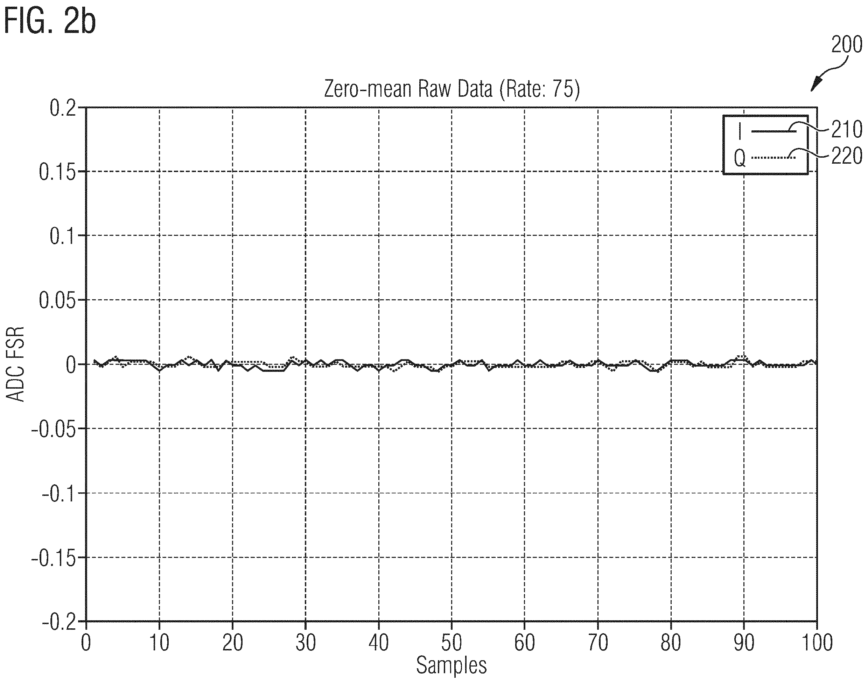

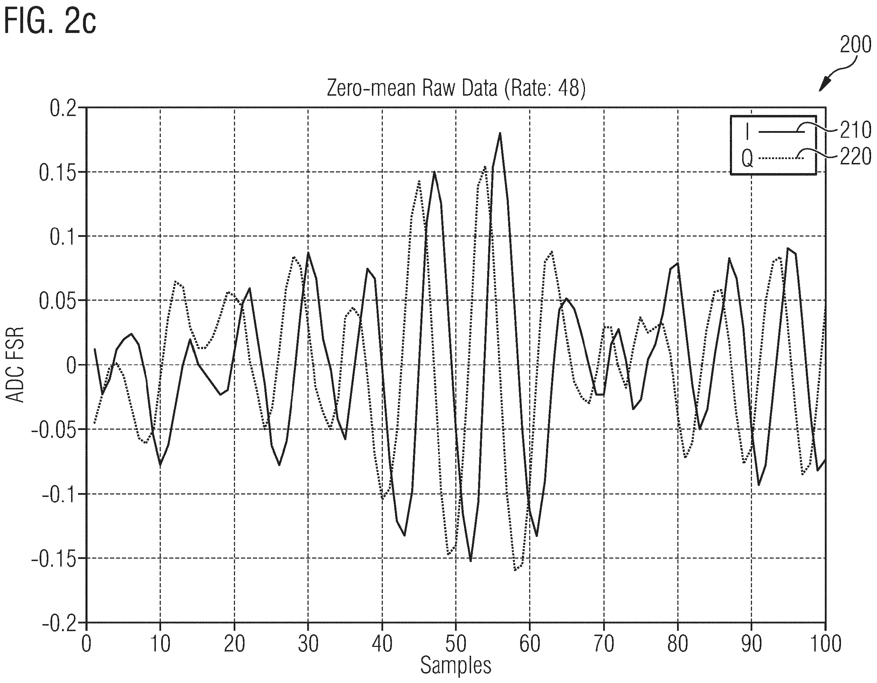

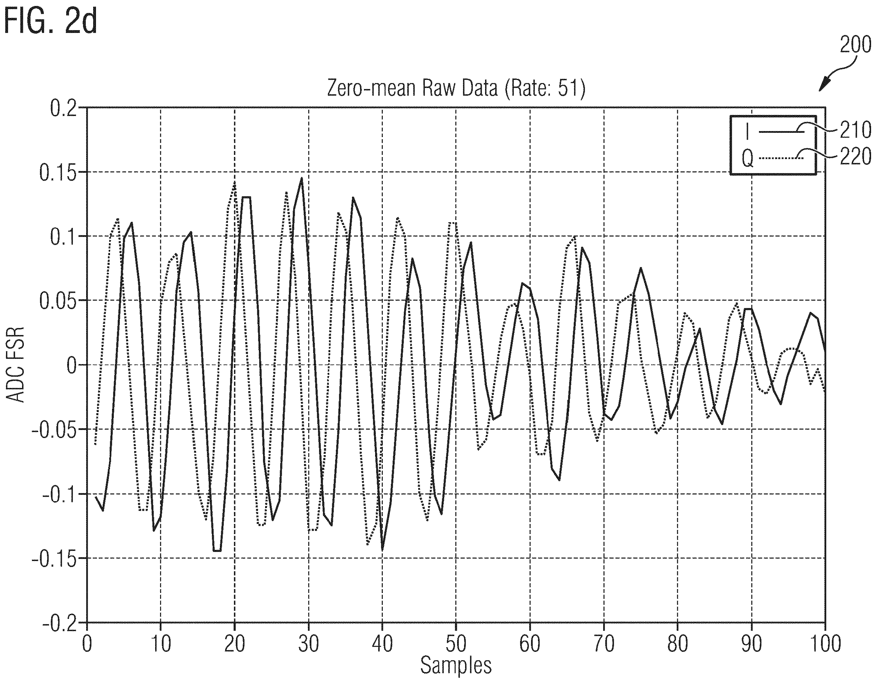

**Fig. 2a to Fig. 2d** illustrate examples of data 200 indicating a measurement signal of a radar sensor in case of presence of an interference signal while no target motion is present in the field of view of the radar sensor (Fig. 2a), in case solely noise is present (Fig. 2b), in case a target motion and no interference signal is present (Fig. 2c), or in case a target motion and an interference signal is present (Fig. 2d). The data 200 may be the data 130 in the above example of the apparatus 100. The data 200 may be received by an interface circuitry of an apparatus, such as apparatus 100, and used by a processing circuitry of the apparatus for determining a rate at which the measurement signal crosses a predefined value, which is in turn, used for determining presence of at least one of an interference signal and a target motion in the field of view.

The data 200 indicates an in-phase component 210 and a quadrature component 220 of the measurement signal. The in-phase component 210 and the quadrature component 220 are each represented as voltage values of an ADC output within an ADC full-scale range (FSR) over consecutive 100 samples (i.e., ordered by a respective occurrence in time).

The in-phase component 210 and the quadrature component 220 are scaled to a mean value of 0, hence, the rate of crossings may be determined by counting the zero crossings of the measurement signal. The processing circuitry may be configured to determine the rate by determining at which rate at least one of the in-phase component and the quadrature component crosses the predefined value. For instance, the processing circuitry may be configured to determine the rate by summing up a number of zero crossings in the in-phase component 210 and a number of zero crossings in the quadrature component 220.

The processing circuitry may further be configured to determine presence of a target motion by determining whether the rate is below a first threshold and, in response to determining that the rate is below the first threshold, determining that a target motion is present in the field of view. The processing circuitry may further be configured to determine presence of an interference signal by determining whether the rate exceeds a second threshold and, in response to determining that the rate exceeds the second threshold, determining that an interference signal is present in the field of view.

In the example of Fig. 2a to Fig. 2d, an exemplary first threshold and an exemplary second threshold may be set to 60 and 80, respectively. In the example of Fig. 2a, the rate is 95 (per 200 samples) indicating presence of an interference signal in the field of view since the rate exceeds the second threshold. In the example of Fig. 2b, the rate is 75 (per 200 samples) indicating pure noise in the field of view since the rate is between the first and the second threshold. Alternatively, the rate of 75 may be interpreted as potential target, and the processing circuitry may be configured to perform a predefined data analysis process on the data 200 to determine whether an interference signal or a target motion is present (or neither). In the example of Fig. 2c, the rate is 48 (per 200 samples) indicating a target motion in the field of view since the rate is below the first threshold. In the example of Fig. 2d, the rate is 51 (per 200 samples) indicating a target motion in the field of view since the rate is below the first threshold.

In the example of Fig. 2d, the target motion is detected regardless of the presence of an interference signal. The additional presence of the interference signal may have caused the rate to increase compared to the rate in case of a target motion without an interference signal. However, this increase of the rate may be assumed to be substantially below a certain limit in a specific application. Thus, the target motion may be still detectable even when an interference signal is present. This may be realized by a suitably chosen first threshold considering the expected increase of the rate caused by an interference signal.

An apparatus as described herein may, therefore, enable target motion detection even when an interference signal is present.

It is to be noted that the values of the data 200 shown in in Fig. 2a, Fig. 2b and Fig. 2c are meant for illustration purposes. In other examples than the one shown in Fig. 2a, Fig. 2b and Fig. 2c, the data 200 may have other values or comprise only one component, hence, the measurement signal may be unsplit in in-phase and quadrature component, or comprise more than two components, e.g., due to sampling of the ADC with several phase shifted sampling signals. In other examples than the one shown in Fig. 2a, Fig. 2b and Fig. 2c, the data 200 may comprise a different number of samples, e.g., a number n ≥ 2 samples or the measurement signal may be unscaled or scaled to a different value.

**Fig. 3** illustrates an example of an electronic device 300 comprising an apparatus 310 as described herein such as apparatus 100, and control circuitry 320 configured to control an operation of the electronic device 300 based on an output signal of the apparatus 310.

The electronic device 300 may be any consumer device, IoT device (Internet of Things) or industrial device which may, e.g., integrate a radar sensor or be communicatively coupled to a radar sensor. The electronic device 300 may be, e.g., a home assistant device. The electronic device 300 may be, e.g., a speaker, a smartphone, television receiver, an air conditioning unit, a smart light or a tablet.

The control circuitry 320 may be configured to control the operation of the electronic device 300 based on an indication of the output signal whether presence of at least one of a target motion or an interference signal in the field of view is determined. The control circuitry 320 may control the operation of the electronic device 300 by, e.g., activating/deactivating the electronic device 300, changing an operation mode or changing an operation parameter of the electronic device 300. For instance, the control circuitry 320 may, in response to determining that an interference signal is present, control a radar sensor of the electronic device 300 or a radar sensor communicatively coupled to the electronic device 300 to change its operating frequency. In another example, the control circuitry 320 may, in response to determining that a target motion is present, control the electronic device 300 to be woken up from a standby mode or, in response to determining that no target motion is present, control the electronic device 300 to switch to the standby mode (e.g., after a certain period of time in which no target motion has been detected). In case the electronic device 300 comprises a speaker, the control circuitry 320 may control a volume of the speaker based on the output signal. In case the electronic device 300 is a smartphone, tablet, monitor or alike, or any device comprising a light source, the control circuitry 320 may control a light intensity of an illumination provided by the light source of the device 300.

The electronic device 300 may decrease false target motion detection of a radar sensor. Further, the electronic device 300 may enable the operation of multiple radar sensors close to each other, even with similar operating frequencies.

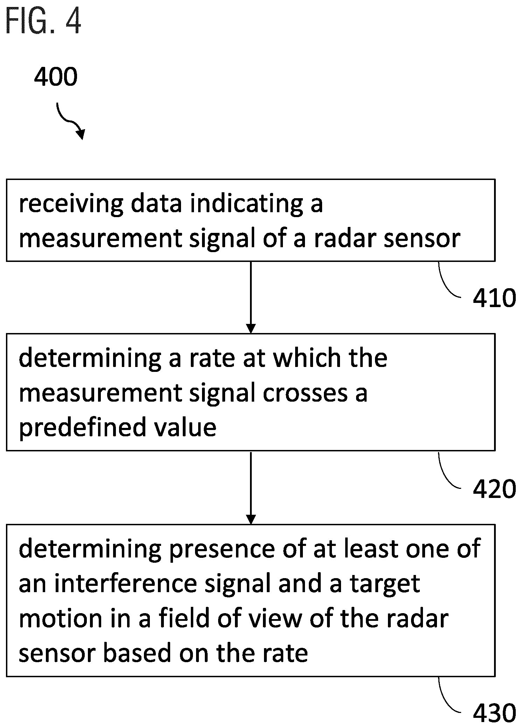

**Fig. 4** illustrates a flowchart of an example of a computer-implemented method 400. The method comprises receiving 410 data indicating a measurement signal of a radar sensor, determining 420 a rate at which the measurement signal crosses a predefined value based on the data and determining 430 presence of at least one of an interference signal and a target motion in a field of view of the radar sensor based on the rate. The method may be performed by an apparatus as described herein, such as apparatus 100.

More details and aspects of the method 400 are explained in connection with the proposed technique or one or more examples described above, e.g., with reference to Fig. 1. The method 400 may comprise one or more additional optional features corresponding to one or more aspects of the proposed technique, or one or more examples described above.

The method 400 may be a software-based solution to decrease false target motion detection of a radar sensor. Further, the method 400 may enable the operation of multiple radar sensors close to each other, even with similar operating frequencies.

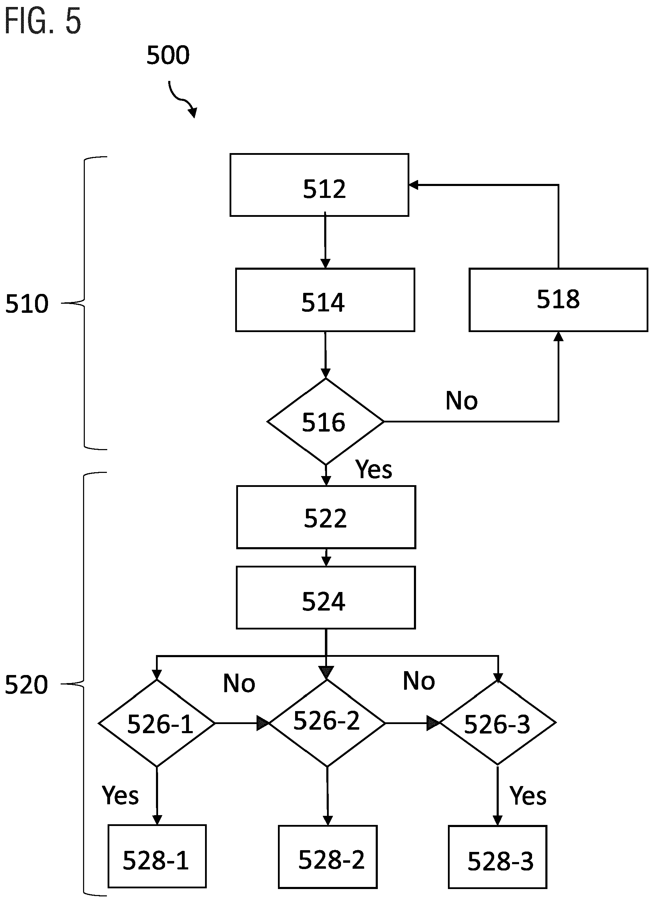

**Fig. 5** illustrates a flowchart of another example of a computer-implemented method 500. The method 500 comprises an upstream process 510 and an evaluation process 520 for evaluating a rate of crossings. The method 500 may be for a Doppler radar sensor and may be consecutively performed for each frame of data indicating a measurement signal of the radar sensor.

The upstream process 510 comprises receiving 512 the data (raw data acquisition) and determining 514 potential presence of a target motion in the field of view of the radar sensor based on the data (the upstream process 510 may be performed by a conventional motion detector). Determining 514 potential presence of a target motion comprises determining a peak-to-peak value (P2P) of the measurement signal, i.e., determining a difference between a highest and a lowest value of the measurement signal. In the example of Fig. 5, the data indicates an in-phase component and a quadrature component of the measurement signal. Determining the peak-to-peak value of the measurement signal comprises determining a respective peak-to-peak value for each of the in-phase component and the quadrature component. For instance, the respective peak-to-peak values may be summed up, yielding P2P of equation 1: $P 2 P = max \left(I\right) - min \left(I\right) + max \left(Q\right) - min \left(Q\right)$ Equation 1 where max(I) and min(I) are a maximum value and a minimum value of the in-phase component, respectively; and where max(Q) and min(Q) are a maximum value and a minimum value of the quadrature component, respectively.

The upstream process 510 further comprises determining 516 potential presence of a target motion in the field of view (scene) by determining whether the peak-to-peak value (P2P) exceeds a threshold. In the example of Fig. 5, the peak-to-peak value is compared to the threshold for each frame of the data. The upstream process 510 further comprises, in response to determining that the peak-to-peak value does not exceed the threshold, determining 518 that no target motion is present in the scene and returning to step 512. Optionally, returning to step 512 may comprise writing an initialization value in a memory for later use in the evaluation process 520. Determining 516 potential presence further comprises, in response to determining that the peak-to-peak value exceeds the threshold, determining that a target motion is potentially present in the scene and activating the evaluation process 520.

The evaluation process 520 comprises receiving the data and determining 522 a rate (e.g., a zero crossing index, ZCI) at which the measurement signal (e.g., in a current frame of the data) crosses a predefined value (e.g., the predefined value may be 0) based on the data. Determining 522 the rate comprises determining at which rate at least one of the in-phase (I) component and the quadrature component (Q) crosses the predefined value. Determining 522 the rate further comprises determining 524 an average number of crossings over the last three frames of the data and rounding the average number of crossings. For instance, the rate may be determined by calculating a current rate for the current frame and storing consecutively the current rate in an array of a memory, e.g., as a sliding window with the size of three frames. The rate may be determined by calculating the mean value of the array, thus, the mean ZCI value of the last three frames and rounding the mean ZCI value to integer.

The evaluation process 520 further comprises determining presence of at least one of an interference signal and a target motion in the field of view based on the rate. Determining presence of at least one of an interference signal and a target motion in the field of view comprises determining 526-1 whether the rate is below (or equal to) a first threshold (target threshold T1) and, in response to determining that the rate is below the first threshold, determining 528-1 that a target motion is present in the field of view.

Determining presence of at least one of an interference signal and a target motion in the field of view further comprises determining 526-2 whether the rate is between the first threshold and a second threshold (interference threshold T2) and, in response to determining that the rate is between the first threshold and the second threshold, determining 528-2 that a target motion is potentially detected. In the latter case, a predefined data analysis process may be performed on the data to determine whether an interference signal or a target motion is present in the field of view.

Determining presence of at least one of an interference signal and a target motion in the field of view further comprises determining 526-3 whether the rate exceeds (or is equal to) the second threshold and, in response to determining that the rate exceeds the second threshold, determining 528-3 that an interference signal is present in the field of view.

The method 500 may be a software-based solution to decrease false target motion detection of a radar sensor. Further, the method 500 may enable the operation of multiple radar sensors close to each other, even with similar operating frequencies.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. An apparatus (100), comprising:
interface circuitry (110) configured to receive data (130) indicating a measurement signal of a radar sensor, wherein the data (130) indicate an in-phase component and a quadrature component of the measurement signal; and
processing circuitry (120) configured to:
determine a first rate at which an in-phase component of the measurement signal crosses a first predefined value;
determine a second rate at which a quadrature component of the measurement signal crosses a second predefined value; determine an overall rate by summing up the first rate and the second rate;
determine presence of a target motion by:
determining whether the overall rate is below a first threshold; and
in response to determining that the overall rate is below the first threshold, determining that a target motion is present in the field of view; and
determine presence of an interference signal by:
determining whether the overall rate exceeds a second threshold; and
in response to determining that the overall rate exceeds the second threshold, determining that an interference signal is present in the field of view.

2. The apparatus (100) of claim 1, wherein the interface circuitry (110) is further configured to receive second data indicating that a target motion is potentially detected in the field of view, wherein the processing circuitry (120) is configured to determine the first, second and overall rates upon receiving the second data.

3. The apparatus (100) of claim 1, wherein the processing circuitry (120) is further configured to:
determine potential presence of a target motion based on the data (130); and
in response to determining potential presence of the target motion, determine the first, second and overall rates.

4. The apparatus (100) of claim 3, wherein the processing circuitry (120) is configured to determine potential presence of a target motion based on at least one of a peak-to-peak value of the measurement signal, a sum of at least one amplitude value of the measurement signal in a frequency domain of the measurement signal and a maximum amplitude value of the measurement signal in the frequency domain.

5. The apparatus (100) of any one of claims 1 to 4, wherein the second threshold is greater than the first threshold, and wherein the interface circuitry (110) is further configured to, in response to determining that the overall rate is between the first threshold and the second threshold, send third data indicating that a target motion is potentially detected in the field of view.

6. The apparatus (100) of any one of claims 1 to 4, wherein the second threshold is greater than the first threshold, and wherein the processing circuitry (120) is further configured to, in response to determining that the overall rate is between the first threshold and the second threshold, perform a predefined data analysis process on the data (130) to determine whether an interference signal or a target motion is present in the field of view.

7. The apparatus (100) of any one of the previous claims, wherein the processing circuitry (120) is configured to determine the first rate and the second rate by determining a number of crossings of the respective predefined value per at least one frame of the data (130).

8. The apparatus (100) of any one of the previous claims, wherein the processing circuitry (120) is configured to determine the first rate and the second rate by determining an average number of crossings of the respective predefined value over at least two frames of the data (130).

9. The apparatus (100) of claim 8, further comprising:
memory configured to store a respective number of crossings of the respective predefined value for each of a predefined number of subsequent frames of the data (130), wherein the processing circuitry (120) is configured to determine the average number of crossings of the respective predefined value based on the respective number of crossings stored in the memory.

10. An electronic device (300), comprising
an apparatus (310) of any one of the claims 1 to 9; and
control circuitry (320) configured to control an operation of the electronic device based on an output signal of the apparatus.

11. A computer-implemented method, comprising:
receiving data indicating a measurement signal of a radar sensor, wherein the data indicate an in-phase component and a quadrature component of the measurement signal;
determining a first rate at which an in-phase component of the measurement signal crosses a first predefined value;
determining a second rate at which a quadrature component of the measurement signal crosses a second predefined value;
determining an overall rate by summing up the first rate and the second rate;
determining presence of a target motion by:
determining whether the overall rate is below a first threshold; and
in response to determining that the overall rate is below the first threshold, determining that a target motion is present in the field of view;
determine presence of an interference signal by:
determining whether the overall rate exceeds a second threshold; and
in response to determining that the overall rate exceeds the second threshold, determining that an interference signal is present in the field of view.

12. A program having a program code for performing the method of claim 11, when the program is executed on a processor or a programmable hardware.

13. A non-transitory machine-readable medium having stored thereon the program of claim 12.

## Patentansprüche

1. Vorrichtung (100), die Folgendes umfasst:
eine Schnittstellenschaltung (110), die dazu ausgelegt ist, Daten (130) zu empfangen, die ein Messsignal eines Radarsensors angeben, wobei die Daten (130) eine In-Phase-Komponente und eine Quadratur-Komponente des Messsignals angeben; und
eine Verarbeitungsschaltung (120), die für Folgendes konfiguriert ist:
Bestimmen einer ersten Rate, mit der eine In-Phase-Komponente des Messsignals einen ersten vordefinierten Wert kreuzt;
Bestimmen einer zweiten Rate, mit der eine Quadraturkomponente des Messsignals einen zweiten vordefinierten Wert kreuzt; Bestimmen einer Gesamtrate durch Summieren der ersten Rate und der zweiten Rate;
Bestimmen des Vorhandenseins einer Zielbewegung durch:
Bestimmen, ob die Gesamtrate unter einer ersten Schwelle liegt; und
als Reaktion auf das Bestimmen, dass die Gesamtrate unter der ersten Schwelle liegt, Bestimmen, dass eine Zielbewegung in dem Sichtfeld vorhanden ist; und
Bestimmen des Vorhandenseins eines Störsignals durch:
Bestimmen, ob die Gesamtrate eine zweite Schwelle überschreitet; und
als Reaktion auf das Bestimmen, dass die Gesamtrate die zweite Schwelle überschreitet, Bestimmen, dass ein Störsignal in dem Sichtfeld vorhanden ist.

2. Vorrichtung (100) nach Anspruch 1, wobei die Schnittstellenschaltung (110) ferner dazu ausgelegt ist, zweite Daten zu empfangen, die angeben, dass eine Zielbewegung potenziell in dem Sichtfeld detektiert wird, wobei die Verarbeitungsschaltung (120) dazu ausgelegt ist, die erste und die zweite Rate sowie die Gesamtrate beim Empfangen der zweiten Daten zu bestimmen.

3. Vorrichtung (100) nach Anspruch 1, wobei die Verarbeitungsschaltung (120) ferner für Folgendes ausgebildet ist:
Bestimmen des potenziellen Vorhandenseins einer Zielbewegung basierend auf den Daten (130); und
als Reaktion auf das Bestimmen des potenziellen Vorhandenseins der Zielbewegung, Bestimmen der ersten und zweiten Rate sowie der Gesamtrate.

4. Vorrichtung (100) nach Anspruch 3, wobei die Verarbeitungsschaltung (120) dazu ausgelegt ist, das potenzielle Vorhandensein einer Zielbewegung basierend auf einem Spitze-zu-Spitze-Wert des Messsignals und/oder einer Summe von mindestens einem Amplitudenwert des Messsignals in einem Frequenzbereich des Messsignals und/oder einem maximalen Amplitudenwert des Messsignals in dem Frequenzbereich zu bestimmen.

5. Vorrichtung (100) nach einem der Ansprüche 1 bis 4, wobei die zweite Schwelle größer als die erste Schwelle ist, und wobei die Schnittstellenschaltung (110) ferner dazu ausgelegt ist, als Reaktion auf das Bestimmen, dass die Gesamtrate zwischen der ersten Schwelle und der zweiten Schwelle liegt, dritte Daten zu senden, die angeben, dass eine Zielbewegung potenziell in dem Sichtfeld detektiert wird.

6. Vorrichtung (100) nach einem der Ansprüche 1 bis 4, wobei die zweite Schwelle größer als die erste Schwelle ist, und wobei die Verarbeitungsschaltung (120) ferner dazu ausgelegt ist, als Reaktion auf das Bestimmen, dass die Gesamtrate zwischen der ersten Schwelle und der zweiten Schwelle liegt, einen vordefinierten Datenanalyseprozess an den Daten (130) durchzuführen, um zu bestimmen, ob ein Interferenzsignal oder eine Zielbewegung in dem Sichtfeld vorhanden ist.

7. Vorrichtung (100) nach einem der vorhergehenden Ansprüche, wobei die Verarbeitungsschaltung (120) dazu ausgelegt ist, die erste Rate und die zweite Rate durch Bestimmen einer Anzahl von Übergängen des jeweiligen vordefinierten Werts pro mindestens einem Rahmen der Daten (130) zu bestimmen.

8. Vorrichtung (100) nach einem der vorhergehenden Ansprüche, wobei die Verarbeitungsschaltung (120) dazu ausgelegt ist, die erste Rate und die zweite Rate durch Bestimmen einer durchschnittlichen Anzahl von Übergängen des jeweiligen vordefinierten Werts über mindestens zwei Rahmen der Daten (130) zu bestimmen.

9. Vorrichtung (100) nach Anspruch 8, die ferner Folgendes umfasst:
einen Speicher, der dazu ausgelegt ist, eine jeweilige Anzahl von Übergängen des jeweiligen vordefinierten Werts für jeden einer vordefinierten Anzahl von nachfolgenden Frames der Daten (130) zu speichern, wobei die Verarbeitungsschaltung (120) dazu ausgelegt ist, die durchschnittliche Anzahl von Übergängen des jeweiligen vordefinierten Werts basierend auf der jeweiligen Anzahl von Übergängen, die in dem Speicher gespeichert sind, zu bestimmen.

10. Elektronische Vorrichtung (300), die Folgendes umfasst:
eine Vorrichtung (310) nach einem der Ansprüche 1 bis 9; und
eine Steuerschaltung (320), die ausgebildet ist, dass sie den Betrieb der elektronischen Vorrichtung auf der Grundlage eines Ausgangssignals der Vorrichtung steuert.

11. Computerimplementiertes Verfahren, das Folgendes umfasst:
Empfangen von Daten, die ein Messsignal eines Radarsensors angeben, wobei die Daten eine In-Phase-Komponente und eine Quadratur-Komponente des Messsignals angeben;
Bestimmen einer ersten Rate, mit der eine In-Phase-Komponente des Messsignals einen ersten vordefinierten Wert kreuzt;
Bestimmen einer zweiten Rate, mit der eine Quadraturkomponente des Messsignals einen zweiten vordefinierten Wert kreuzt;
Bestimmen einer Gesamtrate durch Summieren der ersten Rate und der zweiten Rate;
Bestimmen des Vorhandenseins einer Zielbewegung durch:
Bestimmen, ob die Gesamtrate unter einer ersten Schwelle liegt; und
als Reaktion auf das Bestimmen, dass die Gesamtrate unter der ersten Schwelle liegt, Bestimmen, dass eine Zielbewegung in dem Sichtfeld vorhanden ist;
Bestimmen des Vorhandenseins eines Störsignals durch:
Bestimmen, ob die Gesamtrate eine zweite Schwelle überschreitet; und
als Reaktion auf das Bestimmen, dass die Gesamtrate die zweite Schwelle überschreitet, Bestimmen, dass ein Störsignal in dem Sichtfeld vorhanden ist.

12. Programm mit einem Programmcode zum Durchführen des Verfahrens nach Anspruch 11, wenn das Programm auf einem Prozessor oder einer programmierbaren Hardware ausgeführt wird.

13. Nichtflüchtiges maschinenlesbares Medium mit dem darauf gespeicherten Programm nach Anspruch 12.

## Revendications

1. Appareil (100) comprenant :
une circuiterie (110) d'interface configurée pour recevoir des données (130) indiquant un signal de mesure d'un capteur radar, les données (130) indiquant une composante en phase et une composante en quadrature du signal de mesure ; et
une circuiterie (120) de traitement configurée pour :
déterminer une première fréquence à laquelle une composante en phase du signal de mesure franchit une première valeur prédéfinie ;
déterminer une deuxième fréquence à laquelle une composante en quadrature du signal de mesure franchit une deuxième valeur prédéfinie ; déterminer une fréquence globale en sommant la première fréquence et la deuxième fréquence ;
déterminer la présence d'un mouvement de cible en :
déterminant si la fréquence globale est inférieure à un premier seuil ; et
en réponse à une détermination selon laquelle la fréquence globale est inférieure au premier seuil, déterminant qu'un mouvement de cible est présent dans le champ de vision ; et
déterminer la présence d'un signal d'interférence en :
déterminant si la fréquence globale dépasse un deuxième seuil, et
en réponse à une détermination selon laquelle la fréquence globale dépasse le deuxième seuil, déterminant qu'un signal d'interférence est présent dans le champ de vision.

2. Appareil (100) selon la revendication 1, la circuiterie (110) d'interface étant en outre configurée pour recevoir des deuxièmes données indiquant qu'un mouvement de cible est potentiellement détecté dans le champ de vision, la circuiterie (120) de traitement étant configurée pour déterminer la première, la deuxième et la fréquence globale suite à la réception des deuxièmes données.

3. Appareil (100) selon la revendication 1, la circuiterie (120) de traitement étant en outre configurée pour :
déterminer la présence potentielle d'un mouvement de cible d'après les données (130) ; et
en réponse à la détermination de la présence potentielle du mouvement de cible, déterminer la première, la deuxième et la fréquence globale.

4. Appareil (100) selon la revendication 3, la circuiterie (120) de traitement étant configurée pour déterminer la présence potentielle d'un mouvement de cible sur la base d'au moins une valeur parmi une valeur crête à crête du signal de mesure, une somme d'au moins une valeur d'amplitude du signal de mesure dans un domaine fréquentiel du signal de mesure et une valeur d'amplitude maximale du signal de mesure dans le domaine fréquentiel.

5. Appareil (100) selon l'une quelconque des revendications 1 à 4, le deuxième seuil étant supérieur au premier seuil, et la circuiterie (110) d'interface étant en outre configurée pour, en réponse à une détermination selon laquelle la fréquence globale est comprise entre le premier seuil et le deuxième seuil, envoyer des troisièmes données indiquant qu'un mouvement de cible est potentiellement détecté dans le champ de vision.

6. Appareil (100) selon l'une quelconque des revendications 1 à 4, le deuxième seuil étant supérieur au premier seuil, et la circuiterie (120) de traitement étant en outre configurée pour, en réponse à une détermination selon laquelle la fréquence globale est comprise entre le premier seuil et le deuxième seuil, effectuer un processus d'analyse de données prédéfini sur les données (130) pour déterminer si un signal d'interférence ou un mouvement de cible est présent dans le champ de vision.

7. Appareil (100) selon l'une quelconque des revendications précédentes, la circuiterie (120) de traitement étant configurée pour déterminer la première fréquence et la deuxième fréquence en déterminant un nombre de passages par la valeur prédéfinie respective pour au moins une trame des données (130).

8. Appareil (100) selon l'une quelconque des revendications précédentes, la circuiterie (120) de traitement étant configurée pour déterminer la première fréquence et la deuxième fréquence en déterminant un nombre moyen de passages par la valeur prédéfinie respective sur au moins deux trames des données (130).

9. Appareil (100) selon la revendication 8, comprenant en outre :
une mémoire configurée pour stocker un nombre respectif de passages par la valeur prédéfinie respective pour chacune d'un nombre prédéfini de trames subséquentes des données (130), la circuiterie (120) de traitement étant configurée pour déterminer le nombre moyen de passages par la valeur prédéfinie respective sur la base du nombre respectif de passages stockés dans la mémoire.

10. Dispositif électronique (300), comprenant :
un appareil (310) selon l'une quelconque des revendications 1 à 9 ; et
une circuiterie (320) de commande configurée pour commander un fonctionnement du dispositif électronique sur la base d'un signal de sortie de l'appareil.

11. Procédé mis en œuvre par ordinateur, comprenant :
la réception de données indiquant un signal de mesure d'un capteur radar, les données indiquant une composante en phase et une composante en quadrature du signal de mesure ;
la détermination d'une première fréquence à laquelle une composante en phase du signal de mesure franchit une première valeur prédéfinie,
la détermination d'une deuxième fréquence à laquelle une composante en quadrature du signal de mesure franchit une seconde valeur prédéfinie,
la détermination d'une fréquence globale en sommant la première fréquence et la deuxième fréquence,
la détermination de la présence d'un mouvement de cible en :
déterminant si la fréquence globale est inférieure à un premier seuil ; et
en réponse à une détermination selon laquelle la fréquence globale est inférieure au premier seuil, déterminant qu'un mouvement de cible est présent dans le champ de vision ;
déterminer la présence d'un signal d'interférence en :
déterminant si la fréquence globale dépasse un deuxième seuil, et
en réponse à une détermination selon laquelle la fréquence globale dépasse le deuxième seuil, déterminant qu'un signal d'interférence est présent dans le champ de vision.

12. Programme comprenant un code de programme destiné à réaliser le procédé selon la revendication 11, lorsque le programme est exécuté sur un processeur ou un matériel programmable.

13. Support non transitoire lisible par machine sur lequel est stocké le programme selon la revendication 12.
